(19) Europäisches Patentamt
European Patent Office
Office européen des brevets

(11) **EP 2 360 450 B1**

(12) **FASCICULE DE BREVET EUROPEEN**

(45) Date de publication et mention de la délivrance du brevet:
**25.06.2014 Bulletin 2014/26**

(51) Int Cl.:
*G01C 21/20* *(2006.01)*       *G01C 23/00* *(2006.01)*
*G06F 17/50* *(2006.01)*       *G08G 5/00* *(2006.01)*

(21) Numéro de dépôt: **11153708.0**

(22) Date de dépôt: **08.02.2011**

(54) **Système embarqué d'évaluation de stratégies de vol à bord d'un aéronef**

Bordsystem zur Einschätzung der Flugstrategien an Bord eines Luftfahrzeugs

On-board system for assessing flight strategies on board an aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2010 FR 1051318**

(43) Date de publication de la demande:
**24.08.2011 Bulletin 2011/34**

(73) Titulaire: **Airbus Operations (Société par actions simplifiée)**
**31060 Toulouse (FR)**

(72) Inventeurs:
• **Mere, Jean-Claude**
**31590, Verfeil (FR)**
• **Dramet, Julien**
**31300, Toulouse (FR)**

(74) Mandataire: **Augarde, Eric et al**
**BREVALEX**
**56 Boulevard de l'Embouchure,**
**Bât. B**
**B.P. 27519**
**31075 Toulouse Cedex 2 (FR)**

(56) Documents cités:
**WO-A1-2006/085952      FR-A1- 2 916 842**
**US-A- 5 121 325**

EP 2 360 450 B1

**Description**

**DOMAINE TECHNIQUE**

La présente invention concerne le domaine de systèmes embarqués à bord d'un aéronef et plus particulièrement, d'un système embarqué d'évaluation en lien avec le plan de vol pour évaluer différentes stratégies de vol envisageables.

**ÉTAT DE LA TECHNIQUE ANTÉRIEURE**

Un aéronef possède en général un système de gestion de vol FMS (Flight management System) qui permet à l'équipage d'enregistrer avant le départ un plan de vol constitué d'une suite de points d'acheminements. A partir de ce plan de vol, le système de gestion du vol calcule et affiche sur un écran les différents paramètres de vol comportant des paramètres de temps, de quantité de carburant, d'altitude et de vitesse le long du plan de vol.

Les systèmes de gestion du vol actuels offrent la possibilité d'évaluer des changements de stratégie sur le reste d'un vol en permettant à l'équipage soit de modifier les paramètres de la trajectoire (vitesse et altitude) soit de spécifier des contraintes (altitude, vitesse ou heure prévue d'arrivée) le long du plan de vol, comme dans les documents FR 2916842, US 5121325 ou WO 2006/085952.

Ces changements sont effectués sur une copie (appelée, plan de vol « temporaire » ou « secondaire ») du plan de vol actif, et le système de gestion du vol recalcule les prédictions (heure estimée de passage et quantité de carburant restante) à la verticale des points de ce nouveau plan de vol. Ceci permet à l'équipage d'évaluer les impacts induits par le changement de stratégie ainsi modélisé dans le système de gestion du vol sur les objectifs d'heure d'arrivée et de quantité de carburant restante à destination.

Les changements peuvent être relativement complexes comportant plusieurs changements d'altitude et/ou de vitesse avec potentiellement plusieurs contraintes en différents points du plan de vol. Cependant, la modélisation de ces changements dans un plan de vol induit plusieurs limitations.

Une première limitation concerne le fait que l'équipage ne peut évaluer qu'une stratégie à la fois. Ceci l'oblige s'il veut comparer plusieurs stratégies pour identifier la plus intéressante, à effectuer plusieurs modifications de son plan de vol et à mémoriser ou noter les impacts correspondant à chaque stratégie essayée pour pouvoir effectuer la comparaison. Ces impacts concernent par exemple, la quantité de carburant restante à destination « EFOB » (Estimated Fuel On board) et l'heure d'arrivée à destination « ETA » (Estimated Time of Arrival).

Une autre limitation concerne le fait que le calcul des prédictions le long du plan de vol amendé peut prendre plusieurs minutes en fonctions des changements apportés, ce qui, dans le cas où le pilote souhaite évaluer plusieurs stratégies, peut devenir rédhibitoire surtout si l'équipage a une décision rapide à prendre.

De plus, les systèmes de gestion du vol actuels ne permettent pas d'entrer des contraintes relatives à la quantité de carburant disponible en un point du plan de vol.

Enfin, lorsque l'équipage souhaite évaluer l'impact d'une contrainte de vitesse ou d'heure de passage en un point du plan de vol sur les objectifs de quantité de carburant restant ou d'heure d'arrivée à destination, les systèmes de gestion du vol actuels ne permettent de calculer la stratégie respectant cette contrainte que sur la base du profil d'altitude considéré qui ne représente pas forcément la solution optimale.

L'objet de la présente invention est de proposer un système embarqué simple, précis et remédiant aux inconvénients précités, en particulier en permettant à l'équipage d'évaluer rapidement plusieurs stratégies de vol possibles sans qu'il soit nécessaire de modifier le plan de vol en cours.

**EXPOSÉ DE L'INVENTION**

La présente invention est définie par un système embarqué d'évaluation de stratégies de vol à bord d'un aéronef en lien avec un plan de vol de l'aéronef, le système comportant .

- des moyens de calcul pour déterminer des relations entre des paramètres de vol comportant des paramètres de temps, de quantité de carburant, d'altitude et de vitesse en établissant des corrélations entre le temps de passage et la quantité de carburant en des points de cheminement dudit plan de vol selon différents profils de vitesse et d'altitude,
- des moyens d'interface pour fournir au moins une enveloppe de valeurs desdits paramètres de vol en au moins un point de référence parmi lesdits points de cheminement, ladite enveloppe de valeurs étant représentative d'un domaine de définition d'une pluralité de stratégies de vol,
- des moyens d'interface pour fournir au moins une stratégie déterminée définie par des valeurs déterminées prises par les paramètres de vol audit au moins un point de référence,

- des moyens d'interface pour permettre de sélectionner et fixer la valeur d'un premier paramètre parmi lesdits paramètres de vol engendrant et fournissant une autre enveloppe de valeurs desdits paramètres de vol permettant d'explorer une autre pluralité de stratégies possibles, et
- des moyens d'interface pour permettre de sélectionner et fixer la valeur d'un deuxième paramètre en plus dudit premier paramètre engendrant et fournissant une autre stratégie déterminée.

L'invention permet de fournir de manière rapide une pluralité de stratégies de vol possibles (calculées par rapport aux performances de l'aéronef) sans qu'il soit nécessaire de modifier le plan de vol en cours ni un plan de vol secondaire ou temporaire. Ainsi, l'équipage de l'aéronef peut rapidement et facilement choisir une stratégie optimale en comparant les impacts (valeurs des paramètres) des différentes stratégies envisageables. Plus particulièrement, l'invention permet de fournir à l'équipage les informations dont il a besoin pour décider d'un changement de stratégie de vol en évaluant les différentes possibilités qui s'offrent à lui pour choisir la stratégie la plus adaptée à la poursuite du vol afin par exemple, de rattraper un retard avéré ou d'exploiter au mieux les réserves de carburant dont il dispose compte tenu des événements auxquels il a dû faire face pendant une première partie du vol. Par exemple, l'équipage peut évaluer rapidement plusieurs profils en altitude et choisir la stratégie de vol permettant de respecter les contraintes spécifiées de vitesse ou d'heure de passage en un point ou de quantité de carburant disponible à destination.

On notera que le point de référence peut correspondre au point de destination de l'aéronef sélectionné par exemple, par le système embarqué par défaut, ou à un point quelconque de la route sélectionné par l'équipage.

Avantageusement, les moyens de calcul déterminent l'enveloppe de valeurs desdits paramètres de vol de manière dynamique en fonction de l'avancement de l'aéronef sur le plan de vol.

Ainsi, l'enveloppe de valeurs n'est pas figée et évolue dans le temps pour tenir compte de la restriction des stratégies envisageables au fur et au mesure que l'aéronef s'approche de sa destination.

Selon un premier mode de réalisation, les moyens de calcul et d'interface sont configurés pour sélectionner et fixer de manière automatique ledit premier paramètre de vol en fonction des spécificités du plan de vol.

Selon un deuxième mode de réalisation, les moyens d'interface sont configurés pour permettre à un équipage de l'aéronef de sélectionner et de fixer ledit premier et/ou ledit deuxième paramètre de vol.

Avantageusement, les moyens d'interface sont configurés pour que le premier paramètre sélectionné et fixé corresponde à l'un quelconque des paramètres correspondant à l'altitude et à la vitesse de l'aéronef le long dudit plan de vol, et les moyens d'interface sont en outre configurés pour que le deuxième paramètre sélectionné et fixé corresponde à l'autre quelconque desdits paramètres correspondant à l'altitude et à la vitesse, permettant de fournir une stratégie sur un temps de passage et une quantité de carburant restant audit au moins un point de référence, respectant les valeurs fixées de l'altitude et de la vitesse le long dudit plan de vol.

Avantageusement encore, les moyens d'interface sont configurés pour que le premier paramètre sélectionné et fixé corresponde à l'un quelconque des paramètres correspondant à un temps de passage et une quantité de carburant restant audit au moins un point de référence, et les moyens d'interface sont en outre configurés pour que le deuxième paramètre sélectionné et fixé corresponde à l'autre quelconque desdits paramètres correspondant audit temps de passage et à ladite quantité de carburant restant au même point de référence ou en un autre point, permettant de fournir une stratégie sur un profil des paramètres correspondant à la vitesse et à l'altitude de l'aéronef respectant les valeurs fixées du temps de passage et de la quantité de carburant restant audit au moins un point de référence. On notera qu'il est possible de spécifier un point de référence pour l'heure de passage et un autre point de référence pour la quantité de carburant restant.

Selon un mode particulier de réalisation, les moyens d'interface sont configurés pour permettre de sélectionner une stratégie prédéfinie dans laquelle la sélection et la fixation des valeurs des premier et second paramètres sont prédéterminées, ladite stratégie prédéfinie étant sélectionnée parmi les stratégies prédéfinies suivantes :

- une première stratégie de minimisation de coût opérationnel en fonction d'un indice de coût prédéterminé,
- une deuxième stratégie de minimisation du temps de vol en fonction du carburant disponible à bord,
- une troisième stratégie de maximisation d'une distance franchissable,
- une quatrième stratégie de compromis entre distance franchissable et économies de carburant, et
- une cinquième stratégie de minimisation de débit de carburant par mile nautique.

Avantageusement, les moyens d'interface comportent un moyen de sélection pour sélectionner ledit au moins un point de référence et des moyens d'entrée-sortie associés aux paramètres de vol correspondant à l'altitude, la vitesse, le temps de passage, et la quantité de carburant restant en ledit au moins un point de référence sélectionné, chacun desdits moyens d'entrée-sortie comportant un intervalle de valeurs du paramètre correspondant et un index configuré pour fixer ou pointer une valeur dudit intervalle, les intervalles des paramètres correspondant formant ladite enveloppe de valeurs desdits paramètres, et en ce que lorsqu'un index est actionné pour fixer la valeur d'un premier paramètre, les intervalles associés aux autres paramètres sont modifiés en conséquence pour définir ladite autre enveloppe de valeurs pouvant être prises par les autres paramètres.

En variante, deux desdits moyens d'entrée-sortie sont formés par une échelle double sur laquelle un index est configuré pour pointer/afficher l'heure de passage au point de référence et afficher/pointer la quantité de carburant correspondant à une stratégie vitesse-altitude déterminée optimale.

L'invention vise également un procédé d'évaluation de stratégies de vol en lien avec un plan de vol à bord d'un aéronef, le procédé comportant les étapes suivantes .

- déterminer des relations entre des paramètres de vol comportant des paramètres de temps, de quantité de carburant, d'altitude et de vitesse en établissant des corrélations entre le temps de passage et la quantité de carburant en des points de cheminement dudit plan de vol selon différents profils de vitesse et d'altitude,

- fournir au moins une enveloppe de valeurs desdits paramètres de vol en au moins un point de référence parmi lesdits points de cheminement, ladite enveloppe de valeurs étant représentative d'un domaine de définition d'une pluralité de stratégies de vol,

- fournir au moins une stratégie déterminée définie par des valeurs déterminées prises par les paramètres de vol audit au moins un point de référence,

- sélectionner et fixer la valeur d'un premier paramètre parmi lesdits paramètres de vol engendrant et fournissant une autre enveloppe de valeurs desdits paramètres de vol permettant d'explorer une autre pluralité de stratégies possibles, et

- sélectionner et fixer la valeur d'un deuxième paramètre en plus dudit premier paramètre engendrant et fournissant une autre stratégie déterminée.

## BRÈVE DESCRIPTION DES DESSINS

La Fig. 1 représente un système embarqué d'évaluation, selon l'invention ;
La Fig. 2 illustre un exemple de relations entre les différents paramètres de vol en un point du plan de vol ;
La Fig. 3 illustre un exemple des moyens d'interface du système de la Fig. 1 ;
La Fig. 4 illustre un autre exemple des moyens d'interface du système de la Fig. 1 ; et
La Fig. 5 est un organigramme illustrant les différentes étapes pouvant être réalisées par des moyens de traitement du système de la Fig. 1.

## EXPOSÉ DÉTAILLÉ DE MODES DE RÉALISATION PARTICULIERS

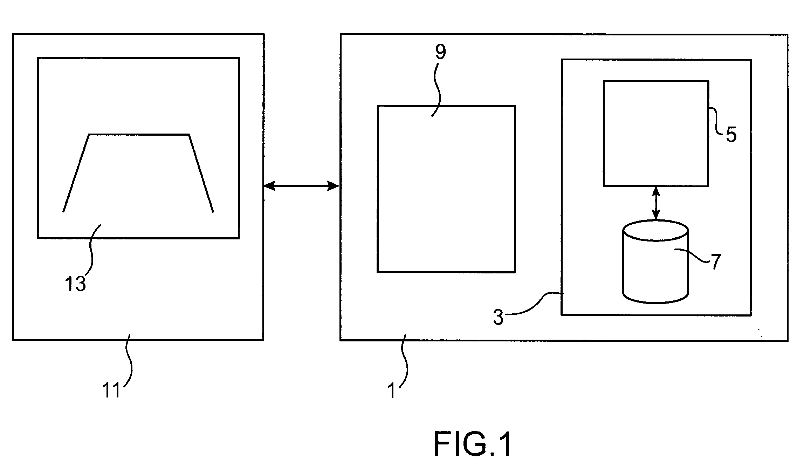

La Fig. 1 illustre de manière schématique un système embarqué d'évaluation 1 de stratégie de vol qui peut être utilisé pour fournir et évaluer de manière rapide une pluralité de stratégies possibles permettant à l'équipage de choisir une stratégie optimale en comparant les impacts des différentes stratégies, selon l'invention. On notera que la figure 1 est également une illustration du procédé d'évaluation, selon l'invention.

Le système embarqué d'évaluation 1 comporte des moyens de traitement 3 comprenant des moyens de calcul 5 et des moyens de stockage 7 ainsi que des moyens d'interface 9. Les moyens d'interface 9 peuvent correspondre à un écran de visualisation interactif déjà existant à bord de l'aéronef. On notera que le système embarqué d'évaluation 1 peut être constitué d'une entité séparée des autres systèmes de l'aéronef. En variante, il peut être compris en totalité ou en partie dans un autre système embarqué. Par exemple, le système embarqué d'évaluation 1 peut être compris dans le système de gestion de vol FMS 11 (Flight Management Système) de l'aéronef.

Avantageusement, le système embarqué d'évaluation 1 est couplé au système de gestion de vol 11 pour être en lien avec le plan de vol 13 qui indique la trajectoire de l'aéronef. Le système de gestion de vol 11 définit les différentes phases de vol ainsi que des paramètres de temps, de quantité de carburant, d'altitude, et de vitesse le long du plan de vol.

Le système embarqué d'évaluation 1 est configuré pour déterminer et présenter à l'équipage des informations dont il a besoin pour décider d'un changement de stratégie en vol en évaluant les différentes possibilités qui s'offrent à lui pour par exemple, rattraper un retard avéré ou pour exploiter au mieux les réserves de carburant dont il dispose compte tenu des évènements auxquels il a dû faire face pendant une première partie du vol.

Le principe de la solution proposée par la présente invention consiste à calculer de façon dynamique une enveloppe de valeurs des paramètres de vol (par exemple, des heures de passage et de la quantité de carburant restante à destination ou en un point quelconque du plan de vol) compte tenu de l'état courant de l'aéronef, de la route à suivre, de la quantité de carburant disponible, des différentes stratégies de vol possibles et de contraintes éventuelles en certains points de la route sélectionnée. Les informations correspondantes aux différentes stratégies de vol sont présentées à l'équipage de façon synthétique de sorte qu'il n'ait pas à modifier le plan de vol actif (sur lequel l'aéronef est guidé) dans le système de gestion du vol pour choisir la stratégie la plus adaptée à la poursuite du vol.

Conformément à l'invention, les moyens de calcul 5 du système embarqué d'évaluation 1 sont configurés pour déterminer des relations entre les paramètres de temps, de quantité de carburant, d'altitude et de vitesse en établissant des corrélations entre le temps de passage et la quantité de carburant en des points de cheminement du plan de vol selon différents profils de vitesse et d'altitude.

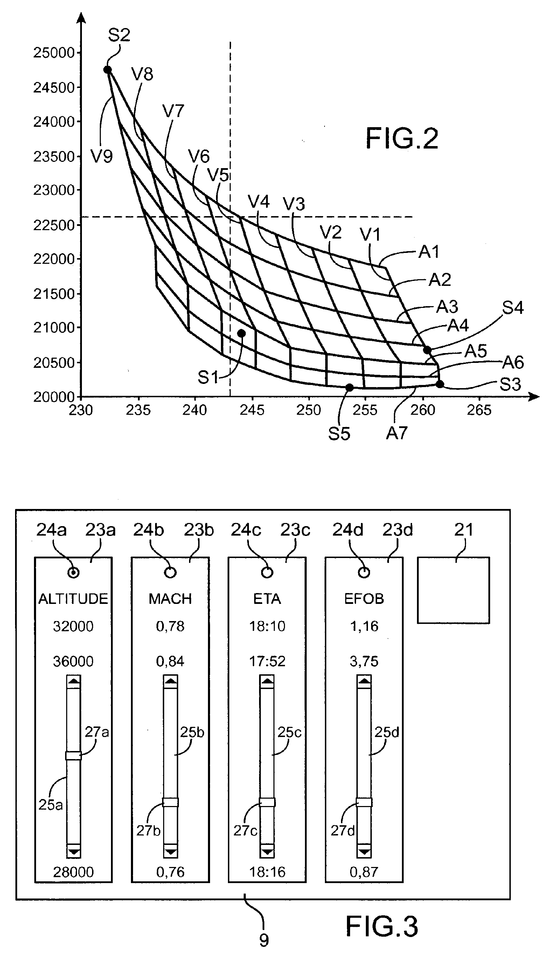

La Fig. 2 illustre un exemple de relations entre les différents paramètres de vol en un point de cheminement particulier du plan de vol. Plus particulièrement, cet exemple montre un réseau de caractéristiques correspondant à des corrélations entre la quantité de carburant et le temps, paramétrées par les différents profils de vitesse et d'altitude.

Selon cet exemple, l'axe des ordonnées correspond à la quantité en kg de carburant consommé à l'arrivée, et l'axe des abscisses correspond au temps de parcours restant en minutes. Cet exemple montre que le temps est compris entre les valeurs 233 minutes et 262 minutes, et la quantité de carburant consommé est comprise entre les valeurs 20100 kg et 24700 kg.

Les courbes horizontales représentent le réseau de caractéristiques entre les grandeurs de quantité de carburant et temps paramétrés par la grandeur d'altitude en pieds (ft). Ainsi, les courbes horizontales A1 à A7 correspondent aux altitudes 32000ft (9753,6m) ; 33000ft (10058,4m) ; 34000ft (10363,2m) ; 35000ft (10668m) ; 36000ft (10972,8) ; 37000ft (11277,6) ; et 38000ft (11582,4m) respectivement.

Les courbes verticales représentent le réseau de caractéristiques entre les grandeurs de quantité de carburant et de temps paramétrés par la grandeur de vitesse mesurée en nombre de Mach (Ma). Ainsi, les courbes verticales V1 à V9 correspondent aux vitesses 0,76Ma ; 0,77Ma ; 0,78Ma ; 0,79Ma ; 0,80Ma ; 0,81Ma ; 0,82Ma ; 0,83Ma ; et 0,84Ma respectivement.

Par exemple, si on fixe la quantité de carburant à 22600kg et le temps à 243 minutes, on est à l'intersection des deux traits pointillés, ce qui fixe la vitesse à 0,809Ma et l'altitude à 324000ft (10363,2m). En revanche, si on ne fixe que le temps à 243 minutes, le carburant peut varier entre 20600 kg et 22800 kg, l'altitude peut varier entre toutes les courbes horizontales A1 à A7 (c'est-à-dire, entre les valeurs 32000ft et 38000ft), et la vitesse peut varier entre environ les courbes V5 et V7 (plus exactement, entre les valeurs 0,808Ma et 0,821Ma).

Ainsi, à chaque instant de vol, un domaine de définition comme celui illustré sur la Fig. 2 peut être utilisé pour définir et afficher les intervalles de variations des quatre paramètres de vol.

En effet, les moyens d'interface 9 sont configurés pour fournir au moins une enveloppe de valeurs des paramètres de vol en au moins un point de référence parmi les points de cheminement. Le point de référence peut correspondre au point de destination de l'aéronef sélectionné par exemple, par le système embarqué par défaut, ou à un point quelconque de la route sélectionné par l'équipage.

La Fig. 3 illustre un mode de réalisation des moyens d'interface 9 représentant une enveloppe de valeurs des paramètres de vol en un point de référence.

Cet exemple montre que les moyens d'interface 9 comportent un moyen de sélection 21 pour sélectionner le point de référence et des moyens d'entrée-sortie 23a, 23b, 23c, et 23d associés aux paramètres de vol correspondant à l'altitude, la vitesse, le temps de passage, et la quantité de carburant restant au point de référence sélectionné. Chacun des moyens d'entrée-sortie 23a à 23d comporte un intervalle ou une plage de valeurs 25a à 25d du paramètre correspondant et un index ou un curseur 27a à 27d configuré pour fixer ou pointer une valeur de l'intervalle.

Cet exemple particulier est donné dans le cas où le point de référence correspond au point de destination de l'aéronef et montre que l'altitude qui peut varier entre les valeurs 28000ft (8534,4m) et 36000ft (10972,8) est fixée à la valeur 32000ft (9753,6). Cette valeur figée de l'altitude limite la variation des autres paramètres de sorte que la vitesse varie entre les valeurs 0,76Ma et 0,84Ma, le temps d'arrivée ETA( Estimated Time of Arrival) varie entre les valeurs 17 :52 et 18 :16 (indiqué ici en heures), et la quantité de carburant restant à destination EFOB (Estimated Fuel On Board) varie entre les valeurs 0,87 tonne et 3,75 tonnes. Les intervalles des paramètres correspondant forment l'enveloppe de valeurs de ces paramètres qui est représentative d'un domaine de définition d'une pluralité de stratégies de vol.

En outre, les moyens d'interface 9 sont configurés pour fournir au moins une stratégie déterminée définie par des valeurs déterminées prises par les paramètres de vol au point de référence.

En effet, l'exemple de la Fig. 3 montre que l'index correspondant à l'altitude est fixé à la valeur 32000ft, et que les index correspondant aux paramètres vitesse, temps, et carburant, pointent les valeurs 0,78Ma ; 18 :10 ; et 1,16 tonnes, respectivement.

De plus, les moyens d'interface 9 sont configurés pour permettre de sélectionner et fixer la valeur d'un premier paramètre parmi les quatre paramètres de vol. En réponse, les moyens de calcul 5 tiennent compte de la valeur du premier paramètre pour engendrer et permettre aux moyens d'interface 9 de fournir une autre enveloppe de valeurs de ces paramètres de vol permettant d'explorer une autre pluralité de stratégies possibles. La pluralité de stratégies de vol est calculée par rapport aux performances de l'aéronef sans qu'il soit nécessaire de modifier le plan de vol 13 en cours ni aucun autre plan de vol.

Selon un premier mode de réalisation, les moyens de calcul 5 et d'interface 9 sont configurés pour que le premier paramètre de vol soit sélectionné et fixé de manière automatique en fonction des spécificités du plan de vol 13.

Selon un deuxième mode de réalisation, les moyens de calcul 5 et d'interface 9 sont configurés pour que le premier paramètre de vol soit sélectionné et fixé par l'équipage de l'aéronef. L'équipage peut sélectionner un premier paramètre en utilisant un des radio-boutons 24a à 24d et en fixer la valeur en actionnant l'index correspondant. L'équipage peut bien entendu à tout moment, soit modifier la valeur du premier paramètre pour en choisir une autre, soit sélectionner et fixer la valeur d'un autre paramètre. En tout cas, lorsqu'un index 27a à 27d est actionné pour fixer la valeur d'un premier paramètre, les intervalles 25a à 25d associés aux autres paramètres sont modifiés en conséquence pour définir une autre enveloppe de valeurs pouvant être prises par les autres paramètres.

On notera que les moyens de calcul 5 déterminent l'enveloppe de valeurs des paramètres de vol de manière dynamique en fonction de l'avancement de l'aéronef sur le plan de vol. Autrement dit, l'enveloppe de valeurs est déterminée de manière évolutive dans le temps pour tenir compte de la restriction des stratégies envisageables au fur et à mesure que l'aéronef s'approche de sa destination.

Les moyens d'interface 9 sont en outre configurés pour permettre à l'équipage de sélectionner et fixer la valeur d'un deuxième paramètre (par exemple, en actionnant un deuxième index 27a à 27d) en plus du premier paramètre. Eventuellement, le deuxième paramètre peut aussi être sélectionné de manière automatique. En réponse, les moyens de calcul 5 tiennent compte des valeurs des premier et deuxième paramètres pour engendrer et permettre aux moyens d'interface 9 de fournir une autre stratégie déterminée. En effet, en fixant les valeurs de deux paramètres, on n'a plus de degré de liberté, et on obtient une stratégie bien déterminée correspondant à un point dans le domaine de définition (voir Fig. 2).

Ainsi, l'équipage de l'aéronef peut rapidement et facilement choisir une stratégie optimale en comparant les impacts des différentes stratégies envisageables.

Plusieurs modes de fonctionnement sont offerts à l'équipage. Selon des premiers modes de fonctionnement, l'équipage peut sélectionner une stratégie prédéfinie (vitesse-altitude) sur toute ou partie de la croisière, les moyens d'interface 9 affichent alors la vitesse et l'altitude correspondant à la stratégie, et les moyens de calcul 5 et d'interface 9 déterminent et affichent les prédictions correspondantes (c'est-à-dire, heure de passage et carburant restant) au point du plan de vol choisi par l'équipage.

En effet, selon ces premiers modes de fonctionnement, le premier paramètre sélectionné et fixé peut être l'un quelconque des paramètres correspondant à l'altitude et à la vitesse de l'aéronef le long du plan de vol 13. Le deuxième paramètre sélectionné et fixé correspond alors à l'autre quelconque des deux paramètres correspondant à l'altitude et à la vitesse. Par exemple, on peut d'abord fixer l'altitude et ensuite la vitesse ou vice versa. Ceci permet de fournir une stratégie sur un temps de passage et une quantité de carburant restant au point de référence sélectionné (par exemple, au point de destination) respectant les valeurs fixées de l'altitude et de la vitesse le long du plan de vol 13.

Ainsi, l'équipage peut par exemple, comparer au point de destination, les différentes possibilités d'heures d'arrivée et de quantités de carburant restant résultant de différentes valeurs de vitesse et altitude envisageables. Le plan de vol actif 13 est mis à jour seulement après que l'équipage ait sélectionné la stratégie (vitesse et altitude) optimale.

Selon des deuxièmes modes de fonctionnement, l'équipage peut sélectionner une heure de passage en un point du plan de vol 13 et une quantité de carburant au même point du plan de vol 13 ou en un autre point. En conséquence, les moyens de calcul 5 et d'interface 9 déterminent et affichent la vitesse et l'altitude optimales sur toute ou partie de la croisière permettant de respecter l'heure d'arrivée ou la quantité de carburant spécifiée par l'équipage.

En effet, selon ces deuxièmes modes de fonctionnement, le premier paramètre sélectionné et fixé correspond à l'un quelconque des paramètres correspondant à un temps de passage et à une quantité de carburant restant à un point de référence sélectionné. Le deuxième paramètre sélectionné et fixé correspond alors à l'autre quelconque des paramètres correspondant au temps de passage et à la quantité de carburant restant au même point de référence ou en un autre point de référence. Ceci permet de fournir une stratégie sur un profil des paramètres correspondant à la vitesse et à l'altitude de l'aéronef respectant les valeurs fixées du temps de passage et de la quantité de carburant restant au(x) point(s) de référence sélectionnée (s) .

Selon une première possibilité, le premier paramètre peut correspondre à un temps de passage à un point de référence et le deuxième paramètre à une quantité de carburant restant au même point de référence (ou éventuellement un autre point de référence). Dans ce cas, l'équipage peut explorer deux types de scénarios. Un premier scénario permet de voir l'effet d'un retard ou d'une avance sur la quantité de carburant en fonction de la stratégie de l'altitude-vitesse. Ceci permet à l'équipage de pouvoir spécifier une contrainte sur l'heure de passage au point de référence et d'évaluer par exemple, quelle quantité supplémentaire de carburant il faut consommer pour récupérer un retard sur l'heure initialement prévue, ou combien de temps peut être récupéré sur l'heure initialement prévue en consommant une quantité supplémentaire de carburant. Un second scénario permet d'identifier la stratégie optimale de l'altitude-vitesse (celle qui maximise la quantité de carburant restant au point de référence) permettant de respecter la contrainte de temps.

Selon une deuxième possibilité, le premier paramètre peut correspondre à une quantité de carburant restant à un point de référence et le deuxième paramètre à un temps de passage au même point de référence (ou éventuellement un autre point de référence). Dans ce cas, on peut aussi explorer deux types de scénarios. Un premier scénario permet de voir l'effet d'une « sur » ou « sous » consommation de quantité de carburant sur l'heure de passage en fonction de la stratégie de l'altitude-vitesse. Ceci permet à l'équipage de pouvoir spécifier une contrainte sur la quantité de carburant restant, et d'évaluer combien de carburant peut être économisé si l'équipage a la possibilité de retarder l'heure de passage au point de référence, ou bien encore quel retard résultera sur l'heure initialement prévue si l'équipage décide d'augmenter les réserves de carburant au point de référence considéré. Un second scénario permet d'identifier la stratégie optimale de l'altitude-vitesse (celle qui minimise le temps de passage au point de référence) permettant de respecter la contrainte de la quantité de carburant restant.

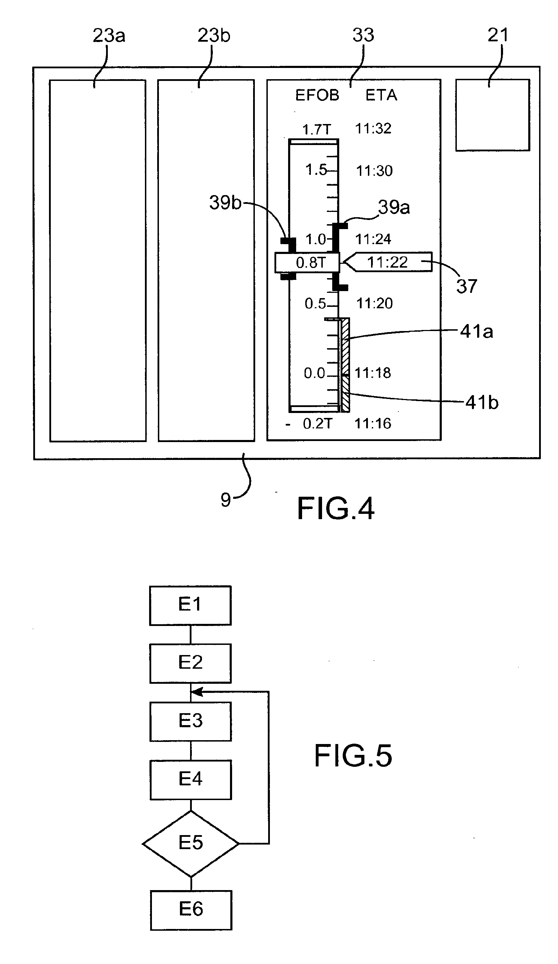

La Fig. 4 illustre une variante des moyens d'interface de la Fig. 3 qui est avantageusement adaptée pour les deuxièmes modes de fonctionnement décrits ci-dessus. L'exemple de la Fig. 4 se distingue de celui de la Fig. 3 par le fait que deux des moyens d'entrée-sortie 23c et 23d sont formés par une échelle double 33 sur laquelle un index 37 est configuré pour pointer/afficher l'heure de passage au point de référence et afficher/pointer la quantité de carburant correspondant à une stratégie vitesse-altitude déterminée optimale.

Plus particulièrement, l'exemple de la Fig. 4 représente une échelle double indiquant une corrélation entre l'estimation de carburant restant à destination et l'estimation de l'heure d'arrivée EFOB/ETA. L'échelle fait apparaître des plages de consigne 39a et 39b fournies par la compagnie de l'aéronef en fonction d'objectifs de gestion de flotte (connexions passagers, temps de service de l'équipage, etc.). Une première plage 39a de consigne pour l'ETA et une deuxième plage de consigne 39b pour l'EFOB. Selon cet exemple particulier, l'index 37 affiche une heure d'arrivée à 11 :22 avec une plage de consigne d'environ plus ou moins deux minutes et pointe une EFOB de 0,8 tonne avec une plage de consigne d'environ plus deux cent kilogrammes ou moins cent kilogrammes.

De plus, l'échelle double EFOB/ETA fait apparaître des valeurs limites de carburant. Un premier bandeau 41a en une première couleur (par exemple, en ambre) indique une plage de valeur de temps où la quantité de carburant restante est inférieure à la valeur minimale définie dans le système de gestion du vol 11 (MIN DEST FOB). Un second bandeau 41b en une autre couleur (par exemple, en rouge) indique une plage de valeur de temps où la stratégie de vol ne permet pas de respecter les réserves réglementaires.

Les moyens d'interface 9 selon l'exemple de la Fig. 4 permettent à l'équipage de sélectionner et fixer la valeur d'un premier paramètre parmi l'altitude 23a ou la vitesse 23b et de déplacer l'index 37 sur l'échelle double 33 de façon à spécifier une heure de passage donnée (à laquelle pour une stratégie donnée correspond une quantité de carburant restante). En conséquence, les moyens d'interface 9 indiquent la vitesse, l'altitude, et la quantité de carburant optimales permettant de respecter l'heure de passage pointée sur l'échelle double 33.

Comme l'échelle double 33 est aussi graduée en quantité de carburant restante, l'équipage peut également évaluer l'impact de l'utilisation d'une partie des réserves de carburant sur l'heure de passage en déplaçant l'index 37 sur une valeur donnée de quantité de carburant restant. Les moyens d'interface 9 indiquent alors l'heure de passage et la stratégie vitesse-altitude optimale lui permettant de respecter la limite de carburant ainsi spécifiée.

En outre, si l'équipage modifie la stratégie (soit en choisissant une nouvelle stratégie déterminée soit en contraignant la vitesse et l'altitude de vol), les moyens de calcul 5 interpolent les nouvelles valeurs d'heure de passage et de quantité de carburant et l'index 37 se déplace sur l'échelle 33 en fonction de la nouvelle stratégie.

Selon des troisièmes modes de fonctionnement, les moyens d'interface 9 sont configurés pour permettre de sélectionner une stratégie prédéfinie dans laquelle la sélection et la fixation des valeurs des premier et/ou second paramètres sont prédéterminées. Cette stratégie prédéfinie peut être sélectionnée parmi une pluralité de stratégies prédéfinies. La Fig. 2 illustre l'emplacement des points S1 à S5 correspondant à des stratégies prédéterminées sur le domaine de définition.

La première (référencée par le point S1) correspond à une stratégie de minimisation de coût opérationnel (ECON) en fonction d'un indice de coût (Cost index) prédéterminé (par exemple, spécifié par l'équipage) . Cette première stratégie S1 de minimisation de coût opérationnel peut avantageusement être une stratégie sélectionnée automatiquement par défaut, par le système embarqué 1 lui-même.

La deuxième (référencée par le point S2) est une stratégie de minimisation du temps de vol (MIN TIME) en fonction du carburant disponible à bord,

La troisième (référencée par le point S3) est une stratégie de maximisation d'une distance franchissable (MAX RANGE).

La quatrième (référencée par le point S4) est une stratégie de compromis entre un maximum de distance franchissable et les économies de carburant (Long Range Cruise « LRC »).

La cinquième (référencée par le point S5) est une stratégie de minimisation de débit carburant par mile nautique (MAX ENDURANCE).

Le choix d'une stratégie permet de fixer les deux paramètres correspondant à l'altitude et la vitesse comme illustré sur la Fig. 2.

Comme indiqué précédemment (premier et deuxièmes modes de fonctionnement), l'équipage a en outre la possibilité de fixer manuellement la vitesse, l'altitude, le temps de passage, ou la quantité de carburant à une valeur constante (par exemple, pour répondre à une consigne du contrôle aérien ou un impératif de la compagnie de l'aéronef).

La Fig. 5 est un organigramme illustrant les différentes étapes pouvant être réalisées par les moyens de traitement 3 du système embarqué d'évaluation 1, selon l'invention. Ces étapes reposent sur un modèle simplifié des performances de l'aéronef basé sur la définition de forfaits permettant par exemple, d'estimer l'heure d'arrivée et la quantité de carburant en un point du plan de vol 13 pour différents profils de vol. Pour chaque profil d'altitude essayé, le principe consiste à établir une relation entre le temps de vol et la quantité de carburant consommée (ou restante dans l'aéronef) en faisant varier la vitesse (l'indice de coût).

En fonction du problème spécifié par l'équipage, l'organigramme du système embarqué d'évaluation utilise l'ensemble des relations temps-carburant obtenues pour répondre au problème.

Par exemple, l'organigramme utilise les relations temps-carburant pour interpoler l'heure d'arrivée et la quantité de carburant restant en un point du plan de vol 13 en fonction d'une stratégie de vol (profil d'altitude et/ou de vitesse contraints) définie par l'équipage.

A l'inverse, l'organigramme peut utiliser l'ensemble des relations temps-carburant pour identifier la meilleure stratégie pour satisfaire les contraintes heure de passage et/ou quantité de carburant spécifiées par l'équipage.

La première étape E1 consiste à calculer des données concernant la phase de montée. On peut par exemple, utiliser des données tabulées pour évaluer directement la durée de vol (CLB_Time), la distance parcourue (CLB_Dist) et la quantité de carburant consommé (CLB_Fuel) entre la position courante et la fin de montée (Top of Climb, en anglais).

Il est aussi possible d'utiliser le premier principe de la mécanique pour réaliser une intégration de la trajectoire.

On peut aussi utiliser un modèle analytique ou bien, un modèle de forfait basé sur la masse courante, l'atmosphère, l'altitude courante, ainsi qu'un paramètre supplémentaire correspondant à la vitesse de montée.

Les étapes E2 à E5 consistent à calculer des données concernant la phase de croisière.

La phase de croisière peut être constituée d'un ou plusieurs segments pour lesquels la vitesse et/ou l'altitude diffèrent.

La distance de croisière est calculée en soustrayant la distance des phases de montée (CLB_Dist) et de descente (DES_Dist) à la distance totale (Total_Dist) restante à parcourir pour arriver à destination.

Cependant, on a besoin de mettre en place un processus itératif car la distance de la phase de descente n'est pas encore connue, et on a besoin de connaître la masse de l'aéronef en fin de croisière et donc la longueur de la phase de croisière pour estimer la longueur de la phase de descente.

Ainsi, l'étape E2 consiste à initier le calcul avec une distance de descente nulle par défaut (DES_Dist=0).

A l'étape E3, on obtient une première estimation (ou surestimation) de la longueur de croisière CRZ_Dist donnée par la formule suivante :

$$CRZ\_Dist = Total\_Dist - CLB\_Dist - DES\_Dist.$$

La durée de la croisière (CRZ_Time) et la quantité de carburant consommée (CRZ_Fuel) peuvent être calculées soit de façon classique à partir d'une intégration des équations de la mécanique du vol, soit à l'aide de modèles tabulés, ou bien encore à l'aide de modèles analytiques suivant la performance recherchée (compromis précision-temps de calcul) pour l'algorithme.

A l'étape E4, les données obtenues à l'étape précédente permettent d'effectuer une première itération sur la masse de l'aéronef en fin de croisière et la longueur de la phase de descente (DES_Dist).

On notera que la phase de descente s'étend de l'altitude de croisière à 10000ft (304m). La flexibilité en dessous de 10000ft est considérée comme nulle. En effet, en dessous de cette altitude, la vitesse est limitée et le profil vertical est fixe. Les données de distance, temps, et consommation de carburant sont donc récupérées des prédictions du système de gestion de vol FMS. Pour le calcul entre l'altitude de croisière et 10000ft, on utilise à nouveau, au choix : une intégration des équations de la mécanique du vol (1er principe), des modèles tabulés ou bien des modèles analytiques. Des solutions mixtes sont également envisageables.

Les itérations des étapes E3 et E4 sont poursuivies jusqu'à ce que la somme des longueurs des trois phases soit égale à la distance à destination à un pourcentage près prédéterminé.

En effet, l'étape E5 est un test sur l'inéquation suivante :

$$CLB\_dist + CRZ\_dist + DES\_dist > Total\_Dist.$$

Tant que la somme des longueurs des trois phases est strictement supérieure à la distance à destination, on recommence les étapes E3 à E5. Sinon, on arrête les itérations à l'étape E6.

Le calcul ci-dessus de trajectoire de croisière est notamment paramétré par l'altitude et la vitesse sur chaque segment de la croisière. De même, le calcul de trajectoire de descente est configuré par l'altitude de croisière et la vitesse de descente. Ce sont ces paramètres qui permettent d'apporter une flexibilité nécessaire pour les résultats.

Ainsi, les moyens de traitement 3 du système embarqué d'évaluation 1 peuvent comprendre un programme d'ordinateur (enregistré par exemple, dans les moyens de stockage 7) comprenant des instructions de code correspondant à l'algorithme de la Fig. 5 pour la mise en oeuvre du procédé selon l'invention, lorsque le programme d'ordinateur est exécuté par ces moyens de traitement.

## Revendications

1. Système embarqué d'évaluation de stratégies de vol à bord d'un aéronef en lien avec un plan de vol (13) de l'aéronef, **caractérisé en ce qu'**il comporte :

   - des moyens de calcul (5) pour déterminer des relations entre des paramètres de vol comportant des paramètres de temps, de quantité de carburant, d'altitude et de vitesse en établissant des corrélations entre le temps de passage et la quantité de carburant en des points de cheminement dudit plan de vol (13) selon différents profils de vitesse et d'altitude,
   - des moyens d'interface (9) pour fournir au moins une enveloppe de valeurs (25a-25d) desdits paramètres de vol en au moins un point de référence parmi lesdits points de cheminement, ladite enveloppe de valeurs étant représentative d'un domaine de définition d'une pluralité de stratégies de vol,
   - des moyens d'interface (9) pour fournir au moins une stratégie déterminée définie par des valeurs déterminées prises par les paramètres de vol audit au moins un point de référence,
   - des moyens d'interface (9) pour permettre de sélectionner et fixer la valeur d'un premier paramètre parmi lesdits paramètres de vol engendrant et fournissant une autre enveloppe de valeurs desdits paramètres de vol permettant d'explorer une autre pluralité de stratégies possibles, et
   - des moyens d'interface (9) pour permettre de sélectionner et fixer la valeur d'un deuxième paramètre en plus dudit premier paramètre engendrant et fournissant une autre stratégie déterminée.

2. Système embarqué selon la revendication 1, **caractérisé en ce que** les moyens de calcul (5) déterminent l'enveloppe de valeurs desdits paramètres de vol de manière dynamique en fonction de l'avancement de l'aéronef sur le plan de vol.

3. Système embarqué selon la revendication 1 ou 2, **caractérisé en ce que** les moyens de calcul (5) et d'interface (9) sont configurés pour sélectionner et fixer de manière automatique ledit premier paramètre de vol en fonction des spécificités du plan de vol.

4. Système embarqué selon l'une quelconque des revendications 1 à 3, **caractérisé en ce que** les moyens d'interface (9) sont configurés pour permettre à un équipage de l'aéronef de sélectionner et de fixer ledit premier et/ou ledit deuxième paramètre de vol.

5. Système embarqué selon l'une quelconque des revendications 1 à 4, **caractérisé en ce que** :

   - les moyens d'interface (9) sont configurés pour que le premier paramètre sélectionné et fixé corresponde à l'un quelconque des paramètres correspondant à l'altitude et à la vitesse de l'aéronef le long dudit plan de vol, et
   - les moyens d'interface (9) sont configurés pour que le deuxième paramètre sélectionné et fixé corresponde à l'autre quelconque desdits paramètres correspondant à l'altitude et à la vitesse, permettant de fournir une stratégie sur un temps de passage et une quantité de carburant restant audit au moins un point de référence, respectant les valeurs fixées de l'altitude et de la vitesse le long dudit plan de vol.

6. Système embarqué selon l'une quelconque des revendications 1 à 4, **caractérisé en ce que** :

   - les moyens d'interface (9) sont configurés pour que le premier paramètre sélectionné et fixé corresponde à l'un quelconque des paramètres correspondant à un temps de passage et une quantité de carburant restant audit au moins un point de référence, et
   - les moyens d'interface (9) sont configurés pour que le deuxième paramètre sélectionné et fixé corresponde à l'autre quelconque desdits paramètres correspondant audit temps de passage et à ladite quantité de carburant restant au même point de référence ou en un autre point, permettant de fournir une stratégie sur un profil des paramètres correspondant à la vitesse et à l'altitude de l'aéronef respectant les valeurs fixées du temps de passage et de la quantité de carburant restant audit au moins un point de référence.

**7.** Système embarqué selon l'une quelconque des revendications 1 à 4, **caractérisé en ce que** les moyens d'interface sont configurés pour permettre de sélectionner une stratégie prédéfinie dans laquelle la sélection et la fixation des valeurs des premier et second paramètres sont prédéterminées, ladite stratégie prédéfinie étant sélectionnée parmi les stratégies prédéfinies suivantes :

- une première stratégie de minimisation de coût opérationnel (S1) en fonction d'un indice de coût prédéterminé,
- une deuxième stratégie de minimisation du temps de vol (S2) en fonction du carburant disponible à bord,
- une troisième stratégie de maximisation d'une distance franchissable (S3),
- une quatrième stratégie de compromis entre distance franchissable et économies de carburant (S4), et
- une cinquième stratégie de minimisation de débit de carburant par mile nautique (S5).

**8.** Système embarqué selon l'une quelconque des revendications 1 à 7, **caractérisé en ce que** les moyens d'interface (9) comportent un moyen de sélection (21) pour sélectionner ledit au moins un point de référence et des moyens d'entrée-sortie (23a à 23d) associés aux paramètres de vol correspondant à l'altitude, la vitesse, le temps de passage, et la quantité de carburant restant en ledit au moins un point de référence sélectionné, chacun desdits moyens d'entrée-sortie comportant un intervalle de valeurs (25a à 25d) du paramètre correspondant et un index (27a à 27d) configuré pour fixer ou pointer une valeur dudit intervalle, les intervalles des paramètres correspondant formant ladite enveloppe de valeurs desdits paramètres, et **en ce que** lorsqu'un index est actionné pour fixer la valeur d'un premier paramètre, les intervalles associés aux autres paramètres sont modifiés en conséquence pour définir ladite autre enveloppe de valeurs pouvant être prises par les autres paramètres.

**9.** Système embarqué selon la revendication 8, **caractérisé en ce que** deux desdits moyens d'entrée-sortie sont formés par une échelle double (33) sur laquelle un index (37) est configuré pour pointer/afficher l'heure de passage au point de référence et afficher/pointer la quantité de carburant correspondant à une stratégie déterminée par une vitesse-altitude optimale.

**10.** Procédé d'évaluation de stratégies de vol en lien avec un plan de vol à bord d'un aéronef, **caractérisé en ce qu'**il comporte les étapes suivantes :

- déterminer des relations entre des paramètres de vol comportant des paramètres de temps, de quantité de carburant, d'altitude et de vitesse en établissant des corrélations entre le temps de passage et la quantité de carburant en des points de cheminement dudit plan de vol selon différents profils de vitesse et d'altitude,
- fournir au moins une enveloppe de valeurs desdits paramètres de vol en au moins un point de référence parmi lesdits points de cheminement, ladite enveloppe de valeurs étant représentative d'un domaine de définition d'une pluralité de stratégies de vol,
- fournir au moins une stratégie déterminée définit par des valeurs déterminées prises par les paramètres de vol audit au moins un point de référence,
- sélectionner et fixer la valeur d'un premier paramètre parmi lesdits paramètres de vol engendrant et fournissant une autre enveloppe de valeurs desdits paramètres de vol permettant d'explorer une autre pluralité de stratégies possibles, et
- sélectionner et fixer la valeur d'un deuxième paramètre en plus dudit premier paramètre engendrant et fournissant une autre stratégie déterminée.

**Patentansprüche**

**1.** Bordsystem zur Bewertung von Flugstrategien an Bord eines Luftfahrzeugs in Verbindung mit einem Flugplan (13) des Luftfahrzeugs, **dadurch gekennzeichnet, dass** es umfasst:

- Rechenmittel (5) zur Bestimmung von Relationen zwischen Flugparametern, umfassend Parameter über Zeit, Treibstoffmenge, Höhe und Geschwindigkeit, durch Erstellung von Korrelationen zwischen der Durchgangszeit und der Treibstoffmenge an Wegpunkten des Flugplans (13) gemäß unterschiedlichen Profilen von Geschwindigkeit und Höhe,
- Schnittstellenmittel (9) zum Liefern wenigstens einer Einhüllenden von Werten (25a-25d) der Flugparameter an wenigstens einem Referenzpunkt aus den Wegpunkten, wobei die Einhüllende von Werten repräsentativ ist für einen Definitionsbereich einer Mehrzahl von Flugstrategien,

- Schnittstellenmittel (9) zum Liefern wenigstens einer bestimmten Strategie, definiert durch bestimmte Werte, die von den Flugparametern an dem wenigstens einen Referenzpunkt eingenommen werden,
- Schnittstellenmittel (9) zum Ermöglichen der Auswahl und Festlegung des Werts eines ersten Parameters aus den Flugparametern zum Erzeugen und Liefern einer anderen Einhüllenden von Werten der Flugparameter, was es erlaubt, eine andere Mehrzahl von möglichen Strategien zu erkunden, und
- Schnittstellenmittel (9) zum Ermöglichen der Auswahl und Festlegung des Werts eines zweiten Parameters zusätzlich zu dem ersten Parameter zum Erzeugen und Liefern einer anderen bestimmten Strategie.

2. Bordsystem nach Anspruch 1, **dadurch gekennzeichnet, dass** die Rechenmittel (5) die Einhüllende von Werten der Flugparameter in dynamischer Weise als Funktion der Fortbewegung des Luftfahrzeugs gemäß dem Flugplan bestimmen.

3. Bordsystem nach Anspruch 1 oder 2, **dadurch gekennzeichnet, dass** die Rechenmittel (5) und Schnittstellenmittel (9) dazu ausgelegt sind, in automatischer Weise den ersten Flugparameter als Funktion der Eigenschaften des Flugplans auszuwählen und festzulegen.

4. Bordsystem nach einem der Ansprüche 1 bis 3, **dadurch gekennzeichnet, dass** die Schnittstellenmittel (9) dazu ausgelegt sind, der Besatzung des Luftfahrzeugs die Auswahl und die Festlegung des ersten und/oder des zweiten Flugparameters zu erlauben.

5. Bordsystem nach einem der Ansprüche 1 bis 4, **dadurch gekennzeichnet, dass**:

- die Schnittstellenmittel (9) dazu ausgelegt sind, dass der erste ausgewählte und festgelegte Parameter einem beliebigen der Parameter entsprechend der Höhe und der Geschwindigkeit des Luftfahrzeugs entlang des Flugplans entspricht, und
- die Schnittstellenmittel (9) dazu ausgelegt sind, dass der zweite ausgewählte und festgelegte Parameter dem anderen beliebigen der Parameter entsprechend der Höhe und der Geschwindigkeit entspricht, was es erlaubt, eine Strategie bezüglich einer Durchgangszeit und einer verbleibenden Kraftstoffmenge an dem wenigstens einen Referenzpunkt zu liefern, die die festgelegten Werte der Höhe und der Geschwindigkeit entlang des Flugplans berücksichtigt.

6. Bordsystem nach einem der Ansprüche 1 bis 4, **dadurch gekennzeichnet, dass**:

- die Schnittstellenmittel (9) dazu ausgelegt sind, dass der erste ausgewählte und festgelegte Parameter einem beliebigen der Parameter entsprechend einer Durchgangszeit und einer verbleibenden Kraftstoffmenge an dem wenigstens einen Referenzpunkt entspricht, und
- die Schnittstellenmittel (9) dazu ausgelegt sind, dass der zweite ausgewählte und festgelegte Parameter dem anderen beliebigen der Parameter entsprechend der Durchgangszeit und der verbleibenden Kraftstoffmenge am gleichen Referenzpunkt oder an einem anderen Punkt entspricht, was es erlaubt, eine Strategie bezüglich einem Parameterprofil entsprechend der Geschwindigkeit und der Höhe des Luftfahrzeugs zu liefern, die die festgelegten Werte der Durchgangszeit und der verbleibenden Kraftstoffmenge an dem wenigstens einen Referenzpunkt berücksichtigt.

7. Bordsystem nach einem der Ansprüche 1 bis 4, **dadurch gekennzeichnet, dass** die Schnittstellenmittel dazu ausgelegt sind, die Auswahl einer vordefinierten Strategie zu erlauben, bei der die Auswahl und die Festlegung der Werte des ersten und des zweiten Parameters vorbestimmt sind, wobei die vordefinierte Strategie ausgewählt ist aus den folgenden vordefinierten Strategien:

- eine erste Strategie zur Minimierung von Betriebskosten (S1) als Funktion eines vorbestimmten Kostenindex,
- eine zweite Strategie zur Minimierung der Flugzeit (S2) als Funktion des verfügbaren Kraftstoffs an Bord,
- eine dritte Strategie zur Maximierung eines zurücklegbaren Abstands (S3),
- eine vierte Strategie eines Kompromisses zwischen zurücklegbarem Abstand und Kraftstoffeinsparung (S4), und
- eine fünfte Strategie zur Minimierung der Kraftstoffverbrauchsrate pro nautischer Meile (S5).

8. Bordsystem nach einem der Ansprüche 1 bis 7, **dadurch gekennzeichnet, dass** die Schnittstellenmittel (9) ein Auswahlmittel (21) umfassen zur Auswahl des wenigstens einen Referenzpunkt, sowie Eingangs-Ausgangs-Mittel (23a bis 23d), die den Flugparametern entsprechend der Höhe, der Geschwindigkeit, der Durchgangszeit und der verbleibenden Kraftstoffmenge an dem wenigstens einen ausgewählten Referenzpunkt entsprechen, wobei jedes der Eingangs-Ausgangs-Mittel ein Intervall von Werten (25a bis 25d) des entsprechenden Parameters sowie einen Index (27a bis 27d) enthält, der dazu ausgelegt ist, einen Wert des Intervalls festzulegen oder zu markieren, wobei die Intervalle der entsprechenden Parameter die Einhüllende von Werten der Parameter bilden, und dass dann, wenn ein Index eingesetzt wird, um den Wert eines ersten Parameters festzulegen, die den anderen Parametern zugeordneten Intervalle als Folge modifiziert werden, um die andere Einhüllende von Werten infolgedessen zu definieren, die von den anderen Parametern eingenommen werden können.

9. Bordsystem nach Anspruch 8, **dadurch gekennzeichnet, dass** zwei der Eingangs-Ausgangs-Mittel durch eine Doppelskala (33) gebildet sind, an der ein Index (37) vorgesehen ist, um die Durchgangszeit am Referenzpunkt zu markieren/anzuzeigen und um die Kraftstoffmenge zu markieren/anzuzeigen, die einer Strategie entspricht, welche durch eine optimale Geschwindigkeit/Höhe bestimmt ist.

10. Verfahren zur Bewertung von Flugstrategien in Verbindung mit einem Flugplan an Bord eines Luftfahrzeugs, **dadurch gekennzeichnet, dass** es die folgenden Schritte umfasst:

   - Bestimmen von Relationen zwischen Flugparametern, umfassend Parameter für Zeit, Kraftstoffmenge, Höhe und Geschwindigkeit, durch Erstellung von Korrelationen zwischen der Durchgangszeit und der Kraftstoffmenge an Wegpunkten des Flugplans gemäß verschiedenen Profilen von Geschwindigkeit und Höhe,
   - Liefern wenigstens einer Einhüllenden von Werten der Flugparameter an wenigstens einem Referenzpunkt aus den Wegpunkten, wobei die Einhüllende von Werten repräsentativ ist für einen Definitionsbereich einer Mehrzahl von Flugstrategien,
   - Liefern wenigstens einer bestimmten Strategie, die durch vorbestimmte Werte definiert ist, welche von den Flugparametern an dem wenigstens einen Referenzpunkt eingenommen werden,
   - Auswählen und Festlegen des Werts eines ersten Parameters aus den Flugparametern zur Erzeugung und Lieferung einer anderen Einhüllenden von Werten der Flugparametern, um die Erkundung einer anderen Mehrzahl von möglichen Strategien zu erlauben, und
   - Auswählen und Festlegen des Werts eines zweiten Parameters zusätzlich zu dem ersten Parameter zur Erzeugung und Lieferung einer anderen bestimmten Strategie.

**Claims**

1. An on-board flight strategy evaluation system aboard an aircraft, linked to an aircraft flight plan (13), **characterised in that** it is included:

   - calculation means (5) for determining relations between the flight parameters including the parameters of time, of fuel quantity, of altitude and of speed by establishing correlations between transit time and the quantity of fuel at waypoints in said flight plan (13) according to different profiles of speed and altitude,
   - interface means (9) for providing at least one envelope of values (25a-25d) of said flight parameters at at least one reference point among said waypoints, said envelope of values being representative of a domain of definition of a plurality of flight strategies,
   - interface means (9) for providing at least one determined strategy defined by the determined values assumed by the flight parameters at said at least one reference point,
   - interface means (9) for allowing the selection and setting of the value of a first parameter among said flight parameters generating and supplying another envelope of values of said flight parameters, allowing the exploration of another plurality of possible strategies, and
   - interface means (9) for allowing the selection and setting of the value of a second parameter in addition to said first parameter, generating and supplying another determined strategy.

2. An on-board system according to Claim 1, **characterised in that** the calculation means (5) determine the envelope of values of said flight parameters dynamically, according to the progress of the aircraft along the flight plan.

3. An on-board system according to Claim 1 or 2, **characterised in that** the calculation means (5) and interface means (9) are configured to automatically select and set said first flight parameter depending on the specifics of the flight plan.

4. An on-board system according to any one of Claims 1 through 3, **characterised in that** the interface means (9) are configured to allow a crew of the aircraft to select and set said first and/or said second flight parameter.

5. An on-board system according to any one of Claims 1 through 4, **characterised in that**:

   - the interface means (9) are configured so that the first parameter selected and set corresponds to any one of the parameters corresponding to the altitude and the speed of the aircraft along said flight plan, and
   - the interface means (9) are configured so that the second parameter selected and set corresponds to the other of said parameters corresponding to altitude and speed, allowing a strategy for transit time and quantity of fuel remaining at said at least one reference point to be supplied that satisfies the set values of altitude and speed along said flight plan.

6. An on-board system according to any one of Claims 1 through 4, **characterised in that**:

   - the interface means (9) are configured so that the first parameter selected and set corresponds to any one of the parameters corresponding to a transit time and a quantity of fuel remaining at said at least one reference point, and
   - the interface means (9) are configured so that the second parameter selected and set corresponds to any other of said parameters corresponding to said transit time and to said quantity of fuel remaining at the same reference point or at another point, allowing a strategy for a parameter profile corresponding to the speed and the altitude of the aircraft to be supplied that satisfies the set values of transit time and quantity of fuel remaining at the at least one reference point.

7. An on-board system according to any one of Claims 1 through 4, **characterised in that** the interface means are configured to allow a predefined strategy in which the selection and setting of the values of the first and second parameters are predetermined, said predefined strategy being selected from among the following predefined strategies:

   - a first strategy for operational cost minimization (S1) according to a predetermined cost index,
   - a second strategy for flight time minimization (S2) according to the fuel available on boa rd,
   - a third strategy for range maximization (S3),
   - a fourth strategy compromising range and fuel savings (S4), and
   - a fifth strategy for minimizing fuel consumption per nautical mile (S5).

8. An on-board system according to any one of Claims 1 through 7, **characterised in that** the interface means (9) include selection means (21) for selecting said at least one reference point and input-output means (23a through 23d) associated with the flight parameters corresponding to altitude, speed, transit time and the quantity of fuel remaining at said at least one selected reference point, each of said input-output means including an interval of values (25a through 25d) of the corresponding parameter and a cursor (27a through 27d) configured to set or mark a value in said interval, the intervals of the corresponding parameters constituting said envelope of values of said parameters, and **in that** when an index is operated to set the value of a first parameter, the associated intervals are consequently modified to define said other envelope of values which can be assumed by the other parameters.

9. An on-board system according to Claim 8, **characterised in that** two of said input-output means are made up of a dual scale (33) on which a cursor (37) is configured to mark/display the time of transit at the reference point and to mark/display the quantity of fuel corresponding to a strategy determined by an optimal speed-altitude.

10. A process for evaluating flight strategies linked with a flight plan aboard an aircraft, **characterised in that** the following steps are included:

   - determining the relations between the flight parameters including the parameters of time, of fuel quantity, of altitude and of speed by establishing correlations between transit time and the quantity of fuel at waypoints of said flight plan according to different profiles of speed and altitude,
   - providing at least one envelope of values of said flight parameters at at least one reference point among the waypoints, said envelope of values being representative of a domain of definition of a plurality of flight strategies,
   - providing at least one determined strategy defined by the determined values assumed by the flight parameters at said at least one reference point,
   - selecting and setting the value of a first parameter among said flight parameters generating and providing another envelope of values of said flight parameters making it possible to explore another plurality of possible flight strategies, and

- selecting and setting the value of a second parameter in addition to said first parameter generating and providing another determined strategy.

FIG.1

FIG.2

FIG.3

23a    23b    33    21

EFOB    ETA

1.7T    11:32

1.5    11:30

39b    1.0    39a    11:24

0.8T    ← 11:22    37

0.5    11:20

41a

0.0    11:18

41b

- 0.2T    11:16

9    FIG.4

E1

E2

E3

E4

E5

E6

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916842
- US 5121325 A
- WO 2006085952 A